(19)

Europäisches
Patentamt
European
Patent Office
Office européen
des brevets

(11) **EP 1 909 422 A2**

(12) **EUROPEAN PATENT APPLICATION**

(43) Date of publication:
**09.04.2008 Bulletin 2008/15**

(51) Int Cl.:
*H04J 3/06* [(2006.01)] *H04L 12/40* [(2006.01)]

(21) Application number: **07116794.4**

(22) Date of filing: **20.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.10.2006 FI 20060875**

(71) Applicant: **Tellabs Oy**
**02630 Espoo (FI)**

(72) Inventors:
• **Laulainen, Mikko**
  **FI-00410 Helsinki (FI)**
• **Hann, Kenneth**
  **FI-02760 Espoo (FI)**
• **Kausiala, Jorma**
  **FI-02810 Espoo (FI)**

(74) Representative: **Konkonen, Tomi-Matti Juhani et al**
**Berggren Oy Ab**
**P.O. Box 16**
**00101 Helsinki (FI)**

(54) **Method and arrangement for transmitting time stamp information**

(57) The invention relates to transmitting time information between elements of a data network. In the present invention, it has surprisingly been discovered that in a network transmitting packet, frame or cell switched data traffic, time stamp information can be transmitted from a network element (101) to another network element (102) by using that part (113a, 113c) of the bit stream (111 b) to be transmitted which is connected, in the transmitting network element (101), to the transmitted bit stream in a location that is placed, in the flowing direction of the transmitted bit stream, after a transmission buffer (103) buffering data packets, frames or cells. In an arrangement according to the invention, the random-type share of the transmission delay experienced by the time stamp information is slight, because the time stamp information does not have to queue in the transmission buffer (103) buffering data packets, frames or cells.

Figure 1

**Description**

**Field of the invention**

The invention relates to the mutual synchronizing of the network elements of a data transmission network. The object of the invention is a method and system for transmitting time information between the network elements of a data transmission network.

**Background of the invention**

In many data transmission networks, there is a need to synchronize the clock machineries provided in the network elements, so that the time data maintained by the clock machineries of different network elements are mutually equal as accurately as possible. In other words, the clock machineries in different network elements should as accurately as possible show a common time for all network elements to be mutually synchronized. Said common time is generally called the universal wall clock time. Said network elements can be for example routers or base stations of a mobile phone network. For instance, in new generation mobile phone networks, it is a requisite for a reliable operation of the data transmission between a mobile phone that moves from the coverage of a base station to the coverage of another base station and the base station network that the base stations follow a common notion of time at a sufficient accuracy.

**Description of the prior art**

In an arrangement according to the prior art, the clock machineries of network elements to be mutually synchronized are synchronized by means of a GPS (Global Positioning System) signal received from a satellite. Naturally this kind of solution requires that each network element to be synchronized is provided with a GPS receiver. A GPS receiver together with its antenna systems increases the manufacturing costs of the network element. In addition, when placing a network element in its working environment, care must be taken that the GPS signal is received at a sufficiently high power level. Network elements are often placed in underground bunkers. In that case there must be built antenna and signal path systems, by means of which the GPS signal is brought to the network element located in the underground bunker.

In another arrangement according to the prior art, mutually synchronized network elements transmit to each other time stamp messages, on the basis of which each network element adjusts the operation frequency and/or operation stage of its own clock machinery. The operation frequency represents the growth rate of the time data given by the clock machinery, and the operation stage represents the value of the time data given by the clock machinery at a certain moment of time. Thus the operation frequency is the derivative of the operation stage with respect to time. On the basis of the information contained by the time stamp messages, the network elements to be mutually synchronized tend to adjust their clock machineries, so that the operation frequencies of the clock machineries of different network elements are as close as possible, and respectively their operation stages are as close as possible. A time stamp message contains that time data value, given by the clock machinery of the network element transmitting the time stamp, that corresponds to the transmission moment of said time stamp message.

In order to illustrate the synchronizing operation based on time stamps, let us now observe two network elements A and B. Let us assume that the network element A transmits to the network element B a time stamp message V1 at a point of time when the time value given by the clock machinery of the network element A is t1. In other words, said time stamp message V1 contains the data t1. The network element B receives said time stamp message V1 at a point of time when the time value given by the clock machinery of the network element B is t2. The difference t2 - t1 contains two components, which are the difference Ds1 between the operation stages of the clock machineries of the network elements A and B at the moment of receiving the time stamp message V1, and the transmission delay S1 of the time stamp message V1 from the network element A to the network element B. In other words, t2 - t1 = Ds1 + S1. Let us assume that the network element B transmits to the network element A a time stamp message V2 at a point of time when the time value given by the clock machinery of the network element B is t3. In other words, said time stamp message V2 contains the data t3. The network element A receives said time stamp message V2 at a point of time when the time value given by the clock machinery of the network element A is t4. The difference t4 - t3 contains two components, which are the difference Ds2 of the operation stages of the clock machineries of the network elements B and A at the moment of receiving the time stamp V2, and the transmission delay S2 of the time stamp from the message network element B to the network element A. In other words, t4 - t3 = Ds2 + S2. In case the transmission delays S1 and S2 are mutually equal, and the difference of the operation stages of the clock machineries of the network elements A and B is not changed during the time between the moments of reception of the time stamp messages V1 and V2, the difference of the operation stages can be calculated as follows:

$$Ds = \frac{(t2 - t1) - (t4 - t3)}{2}, \qquad (1)$$

where Ds = Ds1 = - Ds2. In case the time data t2 is transmitted from the network element B to the network element A, the network element A can, according to the equation (1), calculate how much the operation stage of the clock machinery of the network element A deviates from the operation stage of the clock machinery of the network element B.

In a prior art synchronizing arrangement based on time stamp messages and used in packet, frame or cell switched data transmission networks, the time stamp messages are transmitted between different network elements as data packets, frames or cells. As was already described above, the calculation of the differences of the operation stages by means of the equation (1) is based on assumptions that the difference of the operation steps of the clock machineries of the separate network elements is not changed during the time between the moments of reception of the time stamp messages, and that the transmission delays in different directions are mutually equal. The quality of modern clock machineries is generally so high that this assumption as regards the difference between the operation stages usually holds true. On the other hand, often the assumption regarding the transmission delay in packet, frame and cell-switched data transmission networks does not hold true at a sufficient accuracy, because the transmission delay contains a remarkable random-type share. The reason for said random-type share is, among others, in the queuing delays experienced by the data packets, frames or cells in the transmission buffers and/or reception buffers of the network elements.

In some data transmission systems, an error of the size of the transmission delay between the operation stages of the clock machineries of different network elements can be allowed. If in a situation like this, one network element serves as the master device and the other network elements serve as slave devices that tend to be synchronized with the master device, it suffices that said master device transmits time stamp messages to said slave devices. In this case we are talking about unidirectional transmission of time stamp messages. Also in this kind of working environment, the fluctuation of the transmission delay makes it difficult to adjust the operation frequency and stage of the clock machineries, because the fluctuation in the transmission delays may give a false impression of the change in the difference of the operation stages. The effect of the fluctuation of the transmission delay can be attenuated by low-pass filtering, but as is well known, low-pass filtering slows down the adjusting process.

## Summary of the invention

The invention relates to a system for transmitting time stamp information between network elements, so that the limitations and drawbacks connected to the prior art can be eliminated or alleviated. The invention also relates to a method for transmitting time stamp information between network elements, so that the limitations and drawbacks connected to the prior art can be eliminated or alleviated. The invention also relates to a network element for transmitting time stamp information, so that the limitations and drawbacks connected to the prior art can be eliminated or alleviated.

In the present invention, it has surprisingly been discovered that in a data network transmitting packet, frame or cell switched data traffic, time stamp information can be transmitted from a network element to another network element by using that part of the bit stream passing between the network elements, which part in the network element transmitting said bit stream is connected to said bit stream in a location that is in said transmitting network element placed after the transmission buffer buffering data packets, frames or cells, in the flowing direction of said bit stream.

By means of the invention, there are achieved remarkable advantages:

- the random-type share of the transmission delay experienced by the time stamp information is smaller than in the above described prior art solution based on time stamp messages, because the time stamp information need not queue in a transmission buffer that buffers data packets, frames or cells,

- the network elements obtain more accurate information of the difference of the operation stages between the clock machineries of the network elements than in the above described prior art solution based on time stamp messages, because the random-type share of the transmission delay experienced by the time stamp information is smaller, and

- the network elements can adjust their clock machineries to more accurately indicate wall clock time than in the above described prior art solution based on time stamp messages, because the network elements obtain more accurate information of the difference of the operation stages between the clock machineries of the network elements.

In the present document, both data packets, frames and cells are called by the general term Protocol Data Units, PDU.

An arrangement according to the invention for transmitting time stamp information from a first network element to a second network element, said arrangement including:

- in said first network element a transmission buffer that is arranged to buffer the protocol data units to be transmitted,

- in said first network element a multiplexer that is arranged to generate a combined bit stream by connecting to a first bit stream, read from said transmission buffer and representing said protocol data units, a second bit stream,

- in said first network element transmitter that is arranged to transmit said combined bit stream to a data transmission link,

- in said second network element a receiver that is arranged to receive said combined bit stream from said data transmission link,

is characterized in that the system also includes:

- in said first network element a writing unit that is arranged to place the time stamp information in the bits representing said second bit stream, and

- in said second network element a reading unit that is arranged to read said time stamp information from the bits representing said second bit stream.

The method according to the invention for transmitting time stamp information from a first network element to a second network element, in which method:

- in said first network element, there is read from a transmission buffer that contains protocol data units to be transmitted, a first bit stream representing said protocol data units,

- in said first network element, there is generated a combined bit stream by multiplexing the second bit stream in said first bit stream,

- in said first network element, said combined bit stream data is transmitted to a transmission link, and

- in said second network element, said combined bit stream is received said data transmission link,

is characterized in that in addition, in the method:

- in said first network element, the time stamp information is placed in the bits representing said second bit stream, and

- in said second network element, said time stamp information is read from the bits representing said second bit stream.

The network element according to the invention for transmitting time stamp information to a data transmission link, said network element including:

- a transmission buffer that is arranged to buffer the transmitted protocol data units,

- a multiplexer that is arranged to generate a combined bit stream by connecting to a first bit stream, read from said transmission buffer and representing said protocol data units, a second bit stream, and

- a transmitter that is arranged to transmit said combined bit stream to the transmission port of the network element,

is characterized in that the network element also includes a writing unit that is arranged to place the time stamp information in the bits representing said second bit stream.

The various embodiments of the invention are characterized by what is set forth in the dependent claims.

## Brief description of the drawings

The invention is explained in more detail below, with reference to the preferred embodiments described by way of example, and to the appended drawings, where

Figure 1 illustrates a system according to the invention for transmitting time stamp information between network elements,

Figure 2 illustrates an exemplary situation of how the time stamp information is included in the bit stream to be transmitted by a data transmission link in a system according to an embodiment of the invention,

Figure 3 illustrates an exemplary situation of how the time stamp information is included in the bit stream to be transmitted by a data transmission link in a system according to an embodiment of the invention,

Figure 4 illustrates an exemplary situation of how the time stamp information is included in the bit stream to be transmitted by a data transmission link in a system according to an embodiment of the invention,

Figure 5 illustrates a system according to an embodiment of the invention for transmitting time stamp information between network elements,

Figure 6 is a flow diagram illustrating a method according to an embodiment of the invention for transmitting time stamp information between network elements,

Figure 7 is a flow diagram illustrating a method according to an embodiment of the invention for transmitting time stamp information between network elements, and

Figure 8 illustrates a network element according to an embodiment of the invention.

## Detailed description of the preferred embodiments

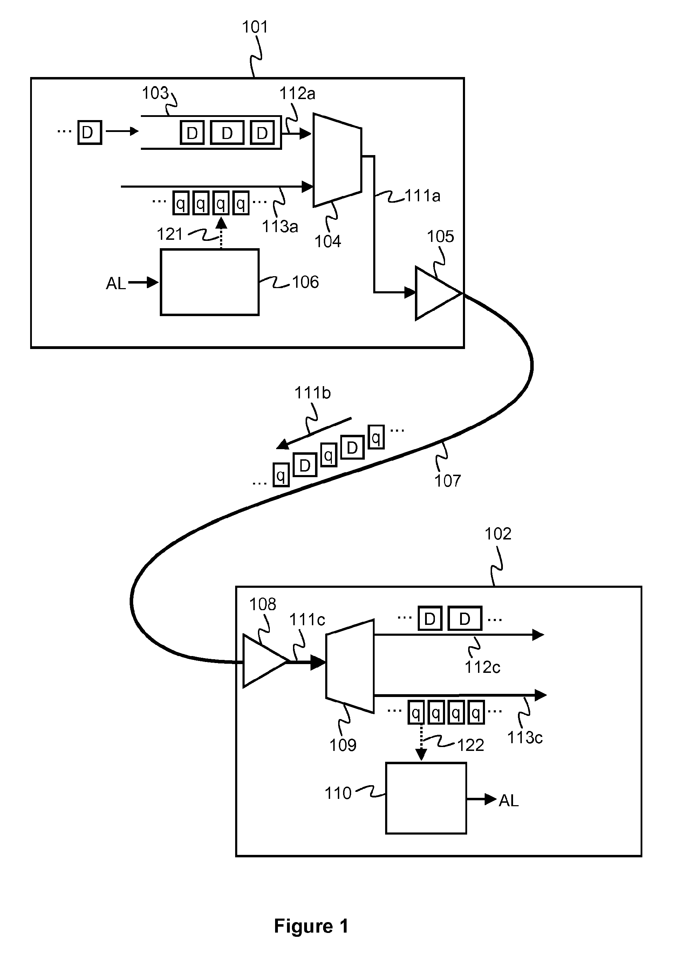

Figure 1 illustrates a system according to an embodiment of the invention for transmitting time stamp information from a network element 101 to a network element 102. The network element 101 is a transmission buffer 103 that is arranged to buffer the protocol data units D to be transmitted. The network element 101 is a writing unit 106 that is arranged to place the time stamp information AL in the bit stream 113a. The dotted line arrow 121 represents an operation where the values of such bits that in a time slot between two points of time represent the bit stream 113a or part of the bit stream 113a are placed so that the set formed by said bits contains the time stamp information AL. The network element 101 is multiplexer 104 that is arranged to generate a combined bit stream 111a by merging the bit stream 113a with the bit stream 112a read from the transmission buffer 103 and representing the protocol data units. The network element 101 is a transmitter 105 that is arranged to transmit the combined bit stream 111a to the data transmission link 107. The network element 102 is a receiver 108 that is arranged to receive the combined bit stream 111b from the data transmission link 107. The network element 102 is a demultiplexer 109 that is arranged to separate from the combined bit stream 111 c the bit stream 112c and the bit stream 113c representing the protocol data units. The network element 102 is a reading unit 110 that is arranged to read the time stamp information AL from the bit stream 113c. The dotted line arrow 122 represents an operation where the values of those bits that in a time slot between two points of time represent the bit stream 113c or part of the bit stream 113c are read.

In a system according to an alternative embodiment of the invention the writing unit 106 is arranged to place the time stamp information AL in those bits of the combined bit stream 111 a emitted from the multiplexer 104 that represent the bit stream 113a or part of the bit stream 113a.

In a system according to an embodiment of the invention, the reading unit 110 is arranged to read the time stamp information AL from those bits of the combined bit stream 111 c that represent the bit stream 113c or part of the bit stream 113c. Now the demultiplexer 109 is not needed for transmitting the time stamp information AL from the network element 101 to the network element 102.

The drawing references 111 a, 111 b and 111 c represent the above mentioned combined bit stream, so that the drawing reference 111a refers to the bits transmitted and/or stored in the signal processing elements of the network element 101 and representing said combined bit stream, the drawing reference 111 b refers to the bits transmitted by the data transmission link and representing said combined bit stream, and the drawing reference 111c refers to the bits transmitted and/or stored in the signal processing elements of the network element 102 and representing said combined bit stream. Respectively, the drawing reference 112a represents in the network element 101 the same bit stream as the drawing reference 112c in the network element 102 , and the drawing reference 113a represents in the network element 101 the same bit stream as the drawing reference 113c in the network element 102.

In a system according to an embodiment of the invention, the protocol data units are Ethernet protocol MAC layer (Media Access Control) data frames, and the bit stream 113a, 113c is included in the interframe gaps that are transmitted over the physical layer of the Ethernet protocol (Ethernet Phy) in between chronologically successive MAC layer data frames. In other words, the time stamp information AL is transmitted in one or several interframe gaps.

In a system according to an embodiment of the invention, the transmitter 105 and the receiver 108 are realized by commercially available physical layer Ethernet adapter circuits (Ethernet-Phy circuits). The data transmission interface between the transmission buffer 103 and the multiplexer 104 is advantageously Mll (Media Independent Interface) or, in case of a 1 Gbit/s transmission rate Ethernet, GMII (Gigabit Media Independent Interface). The multiplexer 104 and the writing unit 106 can be realized for example by one or several programmable processors, an ASIC and/or FPGA circuit (Application Specific Integrated Circuit, Field Programmable Gate Array). Respectively, the demultiplexer 109 and the reading unit 110 can be realized for example by one or several programmable processors, an ASIC and/or FPGA circuit.

The writing unit 106 is preferably arranged to place the time stamp information AL in those bits of the interframe gaps, the values of which are independent of the operation of the Ethernet protocol in the data transmission carried out between the network elements 101 and 102. Now the transmission of the time stamp information AL from the network element 101 to the network element 102 does not disturb other data transmission between the network elements 101 and 102. Among the interframe gap bits, the values of which are independent of the operation of the Ethernet protocol in the data transmission carried out between the network elements 101 and 102, are those interframe gap bits, the values of which are not defined in the technical standards dealing with the Ethernet data transmission, as well as those interframe gap bits, for which there is in said standards defined a usage that is neither needed nor used in the data transmission carried out between the network elements 101 and 102.

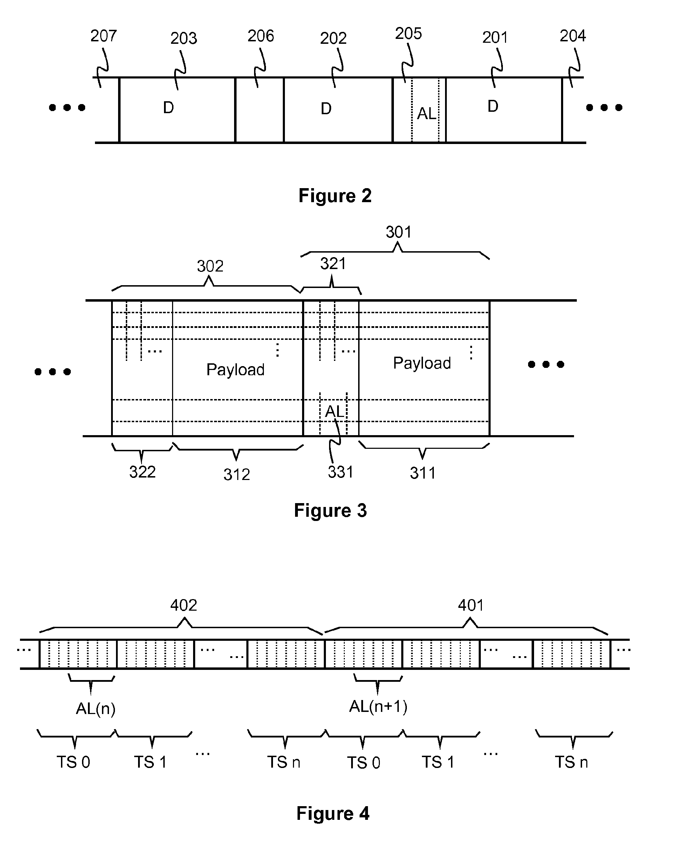

Figure 2 illustrates an exemplary situation of how the time stamp information AL is included in the combined bit stream 111 b transmitted from the data transmission link 107 in a system according to an embodiment of the invention. The areas 201, 202 and 203 represent chronologically successive Ethernet protocol MAC layer data frames, of which the data frame 203 is first in the transmission order. The areas 204, 205, 206, and 207 represent interframe gaps. In this exemplary situation, the time stamp information AL is included in the interframe gap 205 between the data frames 201 and 202.

In a system according to an embodiment of the invention, the writing unit 106 is arranged to place the time stamp information in one interframe gap, so that said time stamp information corresponds to the transmission moment of said interframe gap. In a system according to an alternative embodiment of the invention, the writing unit 106 is arranged to divide the time stamp information in at least two parts and to place said parts in at least two interframe gaps, so that said time stamp information corresponds to the transmission moment of the first transmitted interframe gap of said at least two interframe gaps.

In a system according to an embodiment of the invention, the bit stream 113a, 113c in figure 1 represents the control data of the SDH (Synchronous Digital Hierarchy) frames. Thus, the time stamp information AL is transmitted in frame fields reserved for the control data of the SDH frames. In the present document, all other SDH frame data except payload data is considered to belong to the control data of the SDH frames. Consequently, the control data contains synchronizing words, synchronizing indicators, label data, etc. The protocol data units D in figure 1 can be for example IP (Internet Protocol) data packets.

In a system according to an embodiment of the invention, the multiplexer 104 in figure 1 is part of a commercially available SDH framing circuit that is arranged to place the protocol data units in the payload frame fields of the SDH frames. The SDH framing circuit also forms the control data, i.e. the bit stream 113a.

In a system according to an embodiment of the invention, the demultiplexer 109 in figure 1 is part of a commercially available SDH framing circuit that is arranged to separate the protocol data units from the payload frame fields of the SDH frames.

The writing unit 106 is advantageously arranged to place the time stamp information AL in those control data bits of the SDH frames, the values of which are independent of the operation of the SDH protocol in the data transmission carried out between the network elements 101 and 102. Now the transmission of the time stamp information AL from the network element 101 to the network element 102 does not disturb other data transmission between the network elements 101 and 102. The control data bits of the SDH frame, the values of which are independent of the operation of the SDH protocol in the data transmission carried out between the network elements 101 and 102, are control data bits, the value of which is not defined in technical standards dealing with SDH data transmission, and control data bits, for which said standards have defined a usage that is neither needed nor used in the data transmission carried out between the network elements 101 and 102.

In a system according to an embodiment of the invention, the bit stream 113a, 113c in figure 1 represents the control data of Sonet (Synchronous Optical Network) frames. Thus the time stamp information AL is transmitted in frame fields reserved for the control data of Sonet frames. In the present document, all other Sonet frame data except payload data is considered to belong to the Sonet frame control data. Consequently, the data contains synchronizing words, synchronizing indicators, label data, etc. The protocol data units D in figure 1 can be for example POS (Packet Over Sonet) data packets.

In a system according to an embodiment of the invention, the multiplexer 104 in figure 1 is part of a commercially available Sonet framing circuit that is arranged to place the protocol data units in the payload frame fields of the Sonet frames. The Sonet framing circuit also forms the control data, i.e. the bit stream 113a.

In a system according to an embodiment of the invention, the demultiplexer 109 in figure 1 is part of a commercially available Sonet framing circuit that is arranged to separate the protocol data units from the payload frame fields of the Sonet frames.

The writing unit 106 is preferably arranged to place the time stamp information AL in those control data bits of the Sonet frames, the values of which are independent of the operation of the Sonet protocol in the data transmission carried out between the network elements 101 and 102. Now the transmission of the time stamp information AL from the network element 101 to the network element 102 does not disturb other data transmission between the network elements 101 and 102. The Sonet frame control data bits, the values of which are independent of the operation of the Sonet protocol in the data transmission carried out between the network elements 101 and 102, are control data bits, the value of which is not defined in the technical standards dealing with Sonet data transmission, and control data bits, for which said standards have defined a usage that is neither needed nor used in the data transmission carried out between the network elements 101 and 102.

Figure 3 describes an exemplary situation of how the time stamp information AL is included in the combined bit stream 111 b transmitted by the data transmission link 107 in figure 1 in a system according to an embodiment of the invention. The areas 301 and 302 represent chronologically successive SDH or Sonet frames, of which the SDH or Sonet frame 302 is first in the transmission order. The areas 311 and 312 represent payload data, and the areas 321 and 322 represent control data. In this exemplary situation, the time stamp information AL is included in the control data 321 field 331. In figure 3, SDH or Sonet frames are illustrated in conventional fashion as two-dimensional tables.

In a system according to an embodiment of the invention, the writing unit 106 in figure 1 is arranged to place the time stamp information in the control data of one SDH or Sonet frame, so that said time stamp information corresponds to the transmission moment of said SDH or Sonet frame. In a system according to an alternative embodiment of the invention, the writing unit 106 is arranged to divide the time stamp information in at least two parts and to place said parts in the control data of at least two SDH or Sonet frames, so that said time stamp information corresponds to the transmission moment of the first transmitted SDH or Sonet frame of said at least two SDH or Sonet frames. In a system according to another alternative embodiment, the writing unit 106 is arranged to divide the time stamp information in at least two parts and to place said parts in the control data of at least two SDH or Sonet frames, so that said time stamp information corresponds to the transmission moment of the last transmitted SDH or Sonet frame of said at least two SDH or Sonet frames. The transmission moment of the last transmitted SDH or Sonet frame can be forecast when transmitting the first SDH or Sonet frame, if the chronologically successive SDH or Sonet frames are of a standard size, and the data transmission rate is constant with the data transmission link 107 in figure 1.

In a system according to an embodiment of the invention, the bit stream 113a, 113c in figure 1 represents the control data of PCM (Pulse Coded Modulation) frames. The time stamp information AL is transmitted in predetermined time slots of the PCM frames. Preferably the time stamp information is transmitted in the time slot 0 of the PCM frames. In the present document, all other PCM frame data except payload data is considered to belong to the control data of the PCM frames. The protocol data units D in figure 1 can be for example LAPF (Link Access Procedure for Frame mode services) data frames.

In a system according to an embodiment of the invention, the multiplexer 104 in figure 1 is part of a commercially available PCM framing circuit that is arranged to place the protocol data units in the payload frame fields of the PCM frames. The PCM framing circuit also forms the control data, i.e. the bit stream 113a.

In a system according to an embodiment of the invention, the demultiplexer 109 in figure 1 is part of a commercially available PCM framing circuit that is arranged to separate the protocol data units from the payload frame fields of the PCM frames.

The writing unit 106 in figure 1 is advantageously arranged to place the time stamp information AL in those bits of the time slots TS 0 of chronologically successive PCM frames that are independent of the operation of the PCM protocol in the data transmission carried out between the network elements 101 and 102. Now the transmission of the time stamp information AL from the network element 101 to the network element 102 does not disturb other data transmission between the network elements 101 and 102. Those bits of time slot TS 0, the values of which are independent of the operation of the PCM protocol in the data transmission carried out between the network elements 101 and 102, are those bits of the time slot TS 0, the value of which is not defined in the technical standards dealing with PCM data transmission, and those bits of the time slot TS 0, for which said standards have defined a usage that is neither needed nor used in the data transmission carried out between the network elements 101 and 102.

Figure 4 illustrates an exemplary situation of how the time stamp information AL is included in the combined bit stream 111b to be transmitted by the data transmission link 107 in figure 1 , in a system according to an embodiment of the invention. The areas 401 and 402 represent chronologically successive PCM frames, of which the PCM frame 402 is first in the transmission order. In this exemplary situation, five bits of the time stamp information AL are included in the bits 4-8 of the time slot TS 0. The drawing reference AL(n) refers to a set of five successive bits in the time stamp information AL , and the drawing reference AL(n+1) refers to a set of the next five successive bits. The drawing reference TS 0 refers to the time slot TS 0 of the PCM frame, to be transmitted first, the drawing reference TS 1 refers to the next time slot of the PCM frame slot, and the drawing reference TS n refers to the last time slot of the PCM frame.

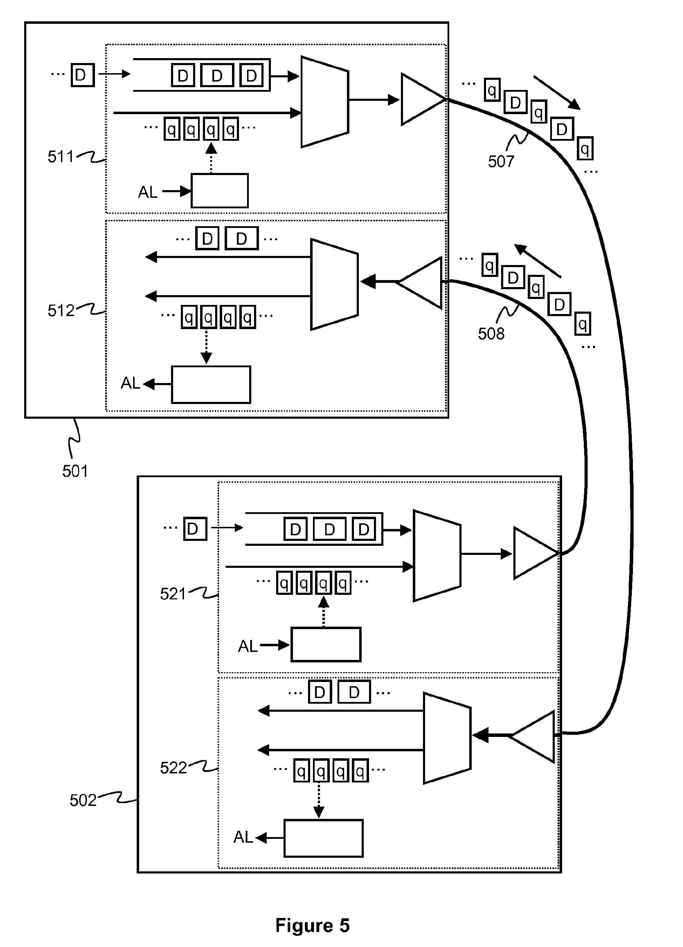

Figure 5 illustrates a system according to an embodiment of the invention for transmitting time stamp information between the network elements 501 and 502. The system illustrated in figure 5 enables a bidirectional transmission of time stamp information between the network elements 501 and 502. The network element 501 is provided with means 511 for sending time stamp information to the data transmission link 507. The means 511 correspond to the means 103-106 of the network element 101 illustrated in figure 1. The network element 501 is provided with means 512 for receiving time stamp information from the data transmission link 508. The means 512 correspond to the means 108-110 of the network element 102 illustrated in figure 1. The network element 502 is provided with means 521 for sending time stamp information to the data transmission link 508. The means 521 correspond to the means 103-106 of the network element 101 illustrated in figure 1. The network element 502 is provided with means 522 for receiving time stamp information from the data transmission link 507. The means 522 correspond to the means 108-110 of the network element 102 illustrated in figure 1.

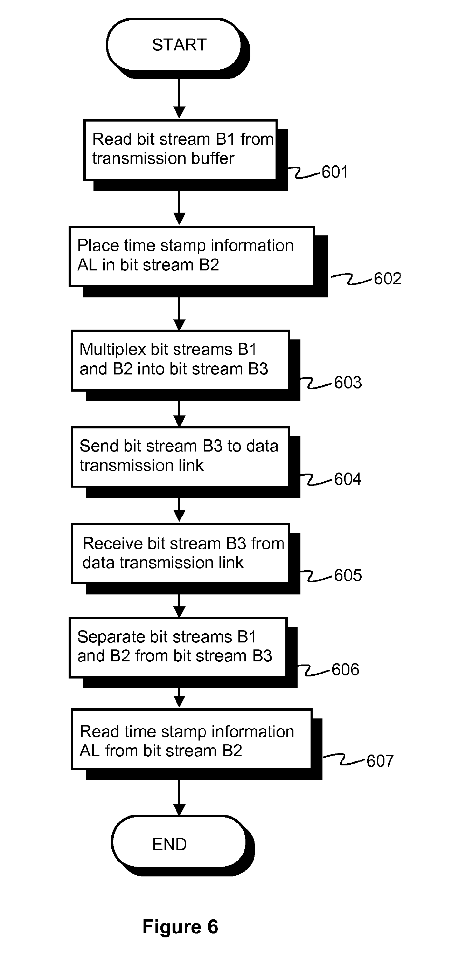

Figure 6 is a flow diagram illustrating a method according to an embodiment of the invention for transmitting time stamp information from a network element A to a network element B. In step 601 , in the network element A there is read, from the transmission buffer that contains protocol data units to be transmitted, the bit stream B1 representing said protocol data units. In step 602 , in the network element A the time stamp information AL is placed in the bit stream B2. In step 603, in the network element A there is produced a combined bit stream B3 by multiplexing the bit stream B2 in the bit stream B1. In step 604, in the network element A said combined bit stream B3 is transmitted to the data transmission link. In step 605, in the network element B said combined bit stream B3 is received from said data transmission link. In step 606, in the network element B the bit stream B1 and bit stream B2 are separated from said combined bit stream B3. In step 607, in the network element B time stamp information AL is read from the bit stream B2.

In a method according to an alternative embodiment of the invention, said time stamp information AL is placed, in between steps 603 and 604, in the bits of the combined bit stream B3 that represent the bit stream B2 or part of the bit stream B2.

In a method according to an embodiment of the invention, said time stamp information AL is read in the network element B from those bits of the combined bit stream B3 that represent the bit stream B2 or part of the bit stream B2. Now the separation step 606 of the bit streams B1 and B2 is not needed.

In a method according to an embodiment of the invention, the protocol data units are Ethernet protocol MAC (Media Access Control) layer data frames, and the bit stream B2 is included in the interframe gaps that are transmitted over the physical layer of the Ethernet protocol (Ethernet Phy) in between chronologically successive MAC layer data frames. Consequently, the time stamp information AL is transmitted in one or several interframe gaps.

In a method according to an embodiment of the invention, the time stamp information AL is placed in step 602 in those bits of the interframe gaps, the values of which are independent of the operation of the Ethernet protocol in the data transmission carried out between the network elements A and B.

In a method according to an embodiment of the invention, the time stamp information AL is placed in step 602 in one interframe gap, so that said time stamp information corresponds to the transmission moment of said interframe gap. In a method according to an alternative embodiment of the invention, the time stamp information AL is divided into at least two parts, and said parts are placed in at least two interframe gaps, so that said time stamp information corresponds to the transmission moment of the first transmitted interframe gap of said at least two interframe gaps.

In a method according to an embodiment of the invention, the bit stream B2 represents the control data of SDH (Synchronous Digital Hierarchy) frames. Consequently, the time stamp information AL is transmitted in frame fields reserved for the control data of SDH frames. The protocol data units can be for example IP (Internet Protocol) data packets.

In a method according to an embodiment of the invention, the time stamp information AL is placed in step 602 in those bits of the control data of the SDH frames, the values of which are independent of the operation of the SDH protocol in the data transmission carried out between the network elements A and B.

In a method according to an embodiment of the invention, the bit stream B2 represents the control data of Sonet (Synchronous Optical Network) frames. Consequently, the time stamp information AL is transmitted in frame fields reserved for the control data of Sonet frames. The protocol data units can be for example POS (Packet Over Sonet) data packets.

In a method according to an embodiment of the invention, the time stamp information AL is placed in step 602 in those bits of the control data of the Sonet frames, the values of which are independent of the operation of the Sonet protocol in the data transmission carried out between the network elements A and B.

In a method according to an embodiment of the invention, the time stamp information AL is placed in step 602 in the control data of one SDH or Sonet frame, so that said time stamp information corresponds to the transmission moment of said SDH or Sonet frame. In a method according to an alternative embodiment of the invention, the time stamp information AL is divided into at least two parts, and said parts are is placed in the control data of at least two SDH or Sonet frames, so that said time stamp information corresponds to the transmission moment of the first transmitted SDH or Sonet frame of said at least two SDH or Sonet frames. In another alternative embodiment of the invention, the time stamp information AL is divided into at least two parts, and said parts are placed in the control data of at least two SDH or Sonet frames, so that said time stamp information corresponds to the transmission moment of the last transmitted SDH or Sonet frame of said at least two SDH or Sonet frames. The transmission moment of the last transmitted SDH or Sonet frame can be forecast when transmitting the first SDH or Sonet frame, if the chronologically successive SDH or Sonet frames are of a standard size, and the data transmission rate of the data transmission link is constant.

In a method according to an embodiment of the invention, the bit streams B1 and B2 are multiplexed in step 603 into a bit stream B3 by using an SDH framing circuit that is arranged to place the protocol data units in the payload frame fields of the SDH frames.

In a method according to an embodiment of the invention, the bit streams B1 and B2 are multiplexed in step 603 into a bit stream B3 by using a Sonet framing circuit that is arranged to place the protocol data units in the payload frame fields of the Sonet frames.

In a method according to an embodiment of the invention, the bit stream B2 represents the control data of PCM (Pulse Coded Modulation) frames. The time stamp information AL is transmitted in predetermined time slots of the PCM frames. Advantageously the time stamp information is transmitted in the time slot TS 0 of the PCM frames. In the present document, all PCM frame data except the payload data is considered to belong to the control data of the PCM frames. The protocol data units can be for example LAPF (Link Access Procedure for Frame mode services) data frames.

In a method according to an embodiment of the invention, the time stamp information AL is placed in those bits of the predetermined time slots of chronologically successive PCM frames, the values of which are independent of the operation of the PCM protocol in the data transmission carried out between the network elements A and B. Advantageously said predetermined time slots are the TS 0 of each PCM frame.

In a method according to an embodiment of the invention, the bit streams B1 and B2 are multiplexed in step 603 into a bit stream B3 by using a PCM framing circuit that is arranged to place the protocol data units in the payload frame fields of PCM frames.

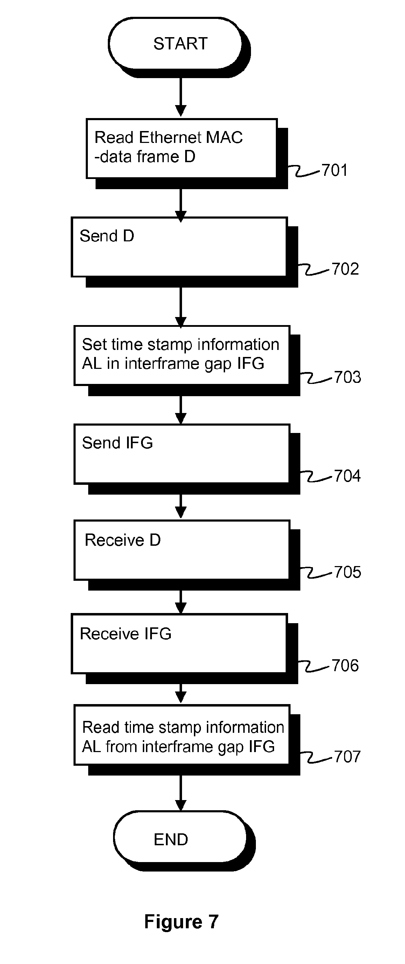

Figure 7 is a flow diagram illustrating a method according to an embodiment of the invention for transmitting time stamp information AL from a network element A to a network element B. In step 701 , in the network element A there is read, from the transmission buffer, the data frame D of the Ethernet protocol MAC (Media Access Control) layer. In step 702, said MAC layer data frame D is transmitted to the data transmission link. In step 703, in the network element A the time stamp information AL is placed in that interframe gap IFG of said MAC layer data frame D that is to be transmitted next. In step 704, said interframe gap IFG is transmitted to the data transmission link. The data frame D and the interframe gap IFG, transmitted in succession, form the bit stream transmitted to the data transmission link. In step 705, said MAC layer data frame D is received in the network element B from the data transmission link. In step 706 , said interframe gap IFG is received in the network element B from the data transmission link. In step 707, the time stamp information AL is read in the network element B from said interframe gap IFG.

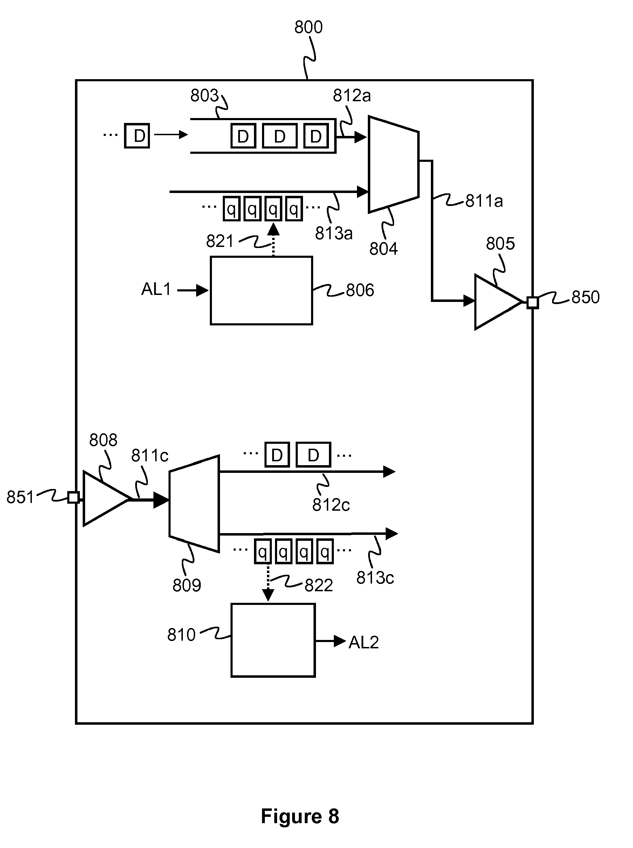

Figure 8 illustrates a network element 800 according to an embodiment of the invention. The network element is a transmission buffer 803 that is arranged to buffer the protocol data units D to be transmitted. The network element is a writing unit 806 that is arranged to place the time stamp information AL1 in the bit stream 813a. The dotted line arrow 821 represents an operation where the values of those bits that in a time slot between two points of time represent the bit stream 813a or part of the bit stream 813a are placed so that the set formed by said bits contains the time stamp information AL1. The network element is provided with a multiplexer 804 that is arranged to generate a combined bit stream 811 a by merging the bit stream 813a in the bit stream 812a read from the transmission buffer 803 and representing the protocol data units. The network element is provided with a transmitter 805 that is arranged to transmit the combined bit stream 811 a to the transmission port 850.

In a network element according to an alternative embodiment of the invention, said writing unit 806 is arranged to place the time stamp information AL1 in the bits of the combined bit stream 811a emitted from the multiplexer 804, which represent the bit stream 813a or part of the bit stream 813a.

A network element according to an embodiment of the invention is provided with a receiver 808 that is arranged to receive the bit stream 811c through the receiving port 851, a demultiplexer 809 that is arranged to separate the bit stream 813c and the bit stream 812c representing the protocol data units from the bit stream 811c. The network element is provided with a reading unit 810 that is arranged to read the time stamp information AL2 from the bit stream 813c. The dotted line arrow 822 represents an operation where the values of those bits that in a time slot between two points of time represent the bit stream 813c or part of the bit stream 813c are read.

In a network element according to an embodiment of the invention, the reading unit 810 is arranged to read the time stamp information AL2 from those bits of the bit stream 811c flowing to the demultiplexer 809 that represent the bit stream 813c or part of the bit stream 813c.

A network element according to an embodiment of the invention is an IP (Internet Protocol) router.

A network element according to an embodiment of the invention is an Ethernet switch.

A network element according to an embodiment of the invention is a base station of a mobile phone network.

A network element according to an embodiment of the invention is an MPLS (Multi Protocol Label Switching) switch.

As is obvious for a man skilled in the art, the invention and its various embodiments are not restricted to the above described examples only, but the invention and its embodiments can be modified within the scope of the independent claim.

**Claims**

1. A system for transmitting time stamp information from a first network element (101) to a second network element (102), said system including:

    - in said first network element, a transmission buffer (103) that is arranged to buffer protocol data units to be transmitted,
    - in said first network element, a multiplexer (104) that is arranged to generate a combined bit stream (111 a) by connecting a second bit stream (113a) to a first bit stream (112a), said first bit stream being read from said transmission buffer and representing said protocol data units,
    - in said first network element, a transmitter (105) that is arranged to transmit said combined bit stream to a data transmission link (107), and
    - in said second network element, a receiver (108) that is arranged to receive said combined bit stream (111 b) from said data transmission link (107),

    **characterized in that** the system also includes:

    - in said first network element, a writing unit (106) that is arranged to place the time stamp information in bits representing said second bit stream (113a), and
    - in said second network element, a reading unit (110) that is arranged to read said time stamp information from the bits representing said second bit stream (113c).

2. A system according to claim 1, **characterized in that** the protocol data units are data frames of Media Access Control layer (MAC-layer) of Ethernet protocol, and said second bit stream (113a, 113c) is included in interframe gaps to be transmitted in between chronologically successive MAC-layer data frames of a physical layer of the Ethernet protocol (Ethernet Phy).

3. A system according to claim 2, **characterized in that** the transmitter (105) and the receiver (108) are realized by means of adapter circuits of the Ethernet physical layer circuit (Ethernet-Phy circuit).

4. A system according to claim 2, **characterized in that** the writing unit (106) is arranged to place said time stamp information in those bits of the interframe gaps, the values of which are independent of the operation of the Ethernet protocol in data transmission carried out between said first network element (101) and said second network element (102).

5. A system according to claim 2, **characterized in that** the writing unit (106) is arranged to place said time stamp information in one interframe gap, so that said time stamp information corresponds to a transmission moment of said interframe gap.

6. A system according to claim 2, **characterized in that** the writing unit (106) is arranged to divide said time stamp information into at least two parts and place said parts in at least two interframe gaps, so that said time stamp information corresponds to a transmission moment of a first transmitted interframe gap of said at least two interframe gaps.

7. A system according to claim 1, **characterized in that** the second bit stream (113a, 113c) represents control data of Synchronous Digital Hierarchy (SDH) frames.

8. A system according to claim 7, **characterized in that** the multiplexer (104) forms part of an SDH-framing circuit that is arranged to place said protocol data units in payload fields of the SDH-frames.

9.  A system according to claim 7, **characterized in that** the writing unit (106) is arranged to place said time stamp information in those control data bits of the SDH-frames, the values of which are independent of operation of SDH-protocol in data transmission carried out between said first network element (101) and said second network element (102).

10. A system according to claim 7, **characterized in that** the writing unit (106) is arranged to place said time stamp information in the control data of one SDH-frame, so that said time stamp information corresponds to a transmission moment of said SDH-frame.

11. A system according to claim 7, **characterized in that** said writing unit (106) is arranged to divide said time stamp information in at least two parts and place said parts in the control data of at least two SDH-frames, so that said time stamp information corresponds to a transmission moment of a first transmitted SDH-frame of said at least two SDH-frames.

12. A system according to claim 1, **characterized in that** said second bit stream (113a, 113c) represents control data of Synchronous Optical Network (Sonet) frames.

13. A system according to claim 12, **characterized in that** said multiplexer (104) forms part of a Sonet framing circuit that is arranged to place said protocol data units in payload fields of the Sonet-frames.

14. A system according to claim 12, **characterized in that** said writing unit (106) is arranged to place said time stamp information in those control data bits of the Sonet frames, the values of which are independent of the operation of Sonet-protocol in data transmission carried out between said first network element (101) and said second network element (102).

15. A system according to claim 12, **characterized in that** said writing unit (106) is arranged to place said time stamp information in the control data of one Sonet-frame, so that said time stamp information corresponds to a transmission moment of said Sonet-frame.

16. A system according to claim 12, **characterized in that** said writing unit (106) is arranged to divide said time stamp information in at least two parts and to place said parts in the control data of at least two Sonet frames, so that said time stamp information corresponds to a transmission moment of a first transmitted Sonet-frame of said at least two Sonet frames.

17. A system according to claim 1, **characterized in that** said second bit stream (113a, 113c) represents control data of Pulse Coded Modulation (PCM) frames.

18. A system according to claim 17, **characterized in that** said multiplexer (104) forms part of a PCM-framing circuit that is arranged to place said protocol data units in payload fields of PCM-frames.

19. A system according to claim 17, **characterized in that** said writing unit (106) is arranged to place said time stamp information in those bits of predetermined time slots of chronologically successive PCM-frames, the values of which are independent of the operation of PCM-protocol in data transmission carried out between said first network element (101) and said second network element (102).

20. A system according to claim 1, **characterized in that** said writing unit (106) is arranged to place said time stamp information in those bits of said combined bit stream (111 a) that represent said second bit stream (113a).

21. A system according to claim 1, **characterized in that** said writing unit (106) is arranged to place said time stamp information in said second bit stream (113a) before forming said combined bit stream (111 a).

22. A network element including:

    - a transmission buffer (803) that is arranged to buffer protocol data units to be transmitted,
    - a multiplexer (804) that is arranged to generate a combined bit stream (811 a) by connecting, to a first bit stream (812a) read from said transmission buffer and representing said protocol data units, a second bit stream (813a), and
    - a transmitter (805) that is arranged to transmit said combined bit stream to a transmission port (850) of the network element,

**characterized in that** the network element also includes a writing unit (806) that is arranged to place time stamp information to be transmitted in bits representing said second bit stream (813a).

23. A network element according to claim 22, **characterized in that** the network element is provided with a receiver (808) that is arranged to receive an arriving bit stream (811 c) from a receiving port (851), a demultiplexer (809) that is arranged to separate from the received bit stream (811 c) a first received bit stream (812c) and a second received bit stream (813c), and a reading unit (810) that is arranged to read received time stamp information from bits representing said second received bit stream (813c).

24. A network element according to claim 22, **characterized in that** said writing unit (806) is arranged to place said time stamp information to be transmitted to those bits of said combined bit stream (811a) that represent said second bit stream (813a).

25. A network element according to claim 22, **characterized in that** said writing unit (806) is arranged to place said time stamp information to be transmitted in said second bit stream (813a) before forming said combined bit stream (811a).

26. A network element according to claim 22, **characterized in that** the network element is an Internet Protocol (IP) router.

27. A network element according to claim 22, **characterized in that** the network element is an Ethernet switch.

28. A network element according to claim 22, **characterized in that** the network element is a base station of a mobile phone network.

29. A network element according to claim 22, **characterized in that** the network element is a Multi Protocol Label Switching (MPLS) switch.

30. A method for transmitting time stamp information from a first network element to a second network element, in which method:

- in said first network element, there is read (601) from a transmission buffer that contains protocol data units to be transmitted, a first bit stream representing said protocol data units,
- in said first network element, a combined bit stream is generated (603) by multiplexing a second bit stream in said first bit stream,
- in said first network element, said combined bit stream is transmitted (604) to a data transmission link, and
- in said second network element, said combined bit stream is received (605) from said data transmission link,

**characterized in that** in addition, in the method:

- in said first network element, said time stamp information is placed (602) in bits representing said second bit stream, and
- in said second network element, said time stamp information is read (607) from the bits representing said second bit stream.

31. A method according to claim 30, **characterized in that** said protocol data units are Media Access Control (MAC) layer data frames of Ethernet protocol, and said second bit stream is included in interframe gaps that are transmitted on a physical layer of the Ethernet protocol in between chronologically successive MAC-layer data frames.

32. A method according to claim 31, **characterized in that** said time stamp information is placed (602) in those bits of said interframe gaps, the values of which are independent of the operation of the Ethernet protocol in data transmission carried out between said first network element and said second network element.

33. A method according to claim 30, **characterized in that** said second bit stream represents control data of Synchronous Digital Hierarchy (SDH) frames.

**34.** A method according to claim 33, **characterized in that** said time stamp information is placed (602) in those bits of the control data of the SDH-frames, the values of which are independent of operation of SDH-protocol in data transmission carried out between said first network element and said second network element.

**35.** A method according to claim 30, **characterized in that** said second bit stream represents control data of Synchronous Digital Hierarchy (Sonet) frames.

**36.** A method according to claim 35, **characterized in that** said time stamp information is placed (602) in those bits of the control data of the Sonet-frames, the values of which are independent of operation of Sonet-protocol in data transmission carried out between said first network element and said second network element.

**37.** A method according to claim 30, **characterized in that** said second bit stream represents control data of Pulse Coded Modulation (PCM) frames.

**38.** A method according to claim 37, **characterized in that** said time stamp information is placed in those bits of predetermined time slots of chronologically successive PCM-frames, the values of which are independent of operation of PCM-protocol in data transmission carried out between said first network element and said second network element.

**39.** A method according to claim 30, **characterized in that** said time stamp information is placed in those bits of said combined bit stream that represent said second bit stream.

**40.** A method according to claim 30, **characterized in that** said time stamp information is placed in said second bit stream prior to forming said combined bit stream.

**Figure 1**

207   203   206   202   205   201   204

D        D        AL        D

**Figure 2**

301

321

302

Payload        AL        Payload

322   312   331   311

**Figure 3**

402   401

AL(n)        AL(n+1)

TS 0   TS 1   ...   TS n   TS 0   TS 1   ...   TS n

**Figure 4**

Figure 5

START

Read bit stream B1 from transmission buffer ⟿—601

Place time stamp information AL in bit stream B2 ⟿—602

Multiplex bit streams B1 and B2 into bit stream B3 ⟿—603

Send bit stream B3 to data transmission link ⟿—604

Receive bit stream B3 from data transmission link ⟿—605

Separate bit streams B1 and B2 from bit stream B3 ⟿—606

Read time stamp information AL from bit stream B2 ⟿—607

END

**Figure 6**

```
              ( START )
                  |
                  v
      +---------------------------+
      | Read Ethernet MAC         |
      | -data frame D             |
      +---------------------------+  ~701
                  |
                  v
      +---------------------------+
      | Send D                    |
      +---------------------------+  ~702
                  |
                  v
      +---------------------------+
      | Set time stamp information|
      | AL in interframe gap IFG  |
      +---------------------------+  ~703
                  |
                  v
      +---------------------------+
      | Send IFG                  |
      +---------------------------+  ~704
                  |
                  v
      +---------------------------+
      | Receive D                 |
      +---------------------------+  ~705
                  |
                  v
      +---------------------------+
      | Receive IFG               |
      +---------------------------+  ~706
                  |
                  v
      +---------------------------+
      | Read time stamp information|
      | AL from interframe gap IFG |
      +---------------------------+  ~707
                  |
                  v
              ( END )
```

**Figure 7**

**Figure 8**